# EUROPEAN PATENT APPLICATION

(11) **EP 2 777 893 A2**
(43) Date of publication of application: **17.09.2014**
(21) Application number: 14157430.1
(22) Date of filing: 03.03.2014
(51) Int. Cl.: B25J 9/00, B25J 19/00

(54) **Robot system comprising a crane tool, and conveyance method**

(30) Priority: 14.03.2013 JP 2013051740
(71) Applicant: Kabushiki Kaisha Yaskawa Denki, Kitakyushu-shi, Fukuoka 806-0004 (JP)
(72) Inventor: Tsutsumi, Ryosuke, Kitakyushu-shi, Fukuoka 806-0004 (JP); Harada, Toshiyuki, Kitakyushu-shi, Fukuoka 806-0004 (JP); Matsufushi, Kenji, Kitakyushu-shi, Fukuoka 806-0004 (JP); Ikeda, Toshiaki, Kitakyushu-shi, Fukuoka 806-0004 (JP)
(74) Representative: Viering, Jentschura & Partner Patent- und Rechtsanwälte

(57) **Abstract**

A crane tool (40, 70) includes: a hook portion (42) for hanging a work (W), attached to one arm section (13) in a first robot arm (10A, 60A) having a base (11), a plurality of arm sections (12 to 14) connected to the base in series, and a plurality of joints (15 to 17) adapted to swing the arm sections, respectively, the crane tool; a counterweight portion (43); and a joint portion (J1, J2) connecting the hook portion to the counterweight portion. The counterweight portion is located such that a joint (16) swinging the arm section to which the hook portion is attached is interposed between the hook portion and the counterweight portion in substantially a horizontal direction.

## Description

### CROSS-REFERENCE TO RELATED APPLICATION

This application claims priority from Japanese Patent Application No. 2013-51740 filed with the Japan Patent Office on March 14, 2013, the entire content of which is hereby incorporated by reference.

### BACKGROUND

### 1. Technical Field

The present invention relates to a robot system, a crane tool for the robot system, and a conveyance method using the robot system.

### 2. Related Art

Conventionally, robot systems have been employed in various manufacturing lines of products. For example, Japanese Laid-open Patent Publication No. 2003-200376 discloses a robot system having a robot arm for welding operation. The robot arm has a base, a plurality of arm sections, a wrist section, and a plurality of joints. The joints connect the plurality of arm sections and the wrist section to the base part in series, and cause the arm sections and the wrist section neighboring at the tip side to swing, respectively. The wrist section is attached with a welding torch.

In the manufacturing line using the above-described robot system, a work is carried in and out with respect to an operation area of the robot arm. However, there is a limit in the weight of the work that can be carried by the robot arm that is adapted to perform other operation than the conveyance, such as welding. Therefore, carrying in and out of the work is often made by the conveyance apparatus such as a crane provided separated from the robot arm. In this case, the installation space of the conveyance apparatus has to be secured in addition to the installation space of the robot arm. This results in a larger occupancy space of the manufacturing line. When the scale of the building is small, it is often difficult to build the manufacturing line due to the limited space.

Therefore, the purpose of the present disclosure is to provide a robot system, a crane tool, and a conveyance method that allows for reduced space of the manufacturing line.

### SUMMARY

A crane tool according to one aspect of the present disclosure includes: a hook portion for hanging a work, attached to one arm section in a first robot arm having a base, a plurality of arm sections connected to the base in series, and a plurality of joints adapted to swing the arm sections, respectively, the crane tool; a counterweight portion; and a connecting portion connecting the hook portion to the counterweight portion. The counterweight portion is located such that a joint swinging the arm section to which the hook portion is attached is interposed between the hook portion and the counterweight portion in substantially a horizontal direction.

### BRIEF DESCRIPTION OF DRAWINGS

FIG. 1 is a side view illustrating a general configuration of a robot system according to a first embodiment.
FIG. 2 is a side view illustrating a state where a robot arm lowers a hook portion.
FIG. 3 is a side view illustrating a state where a wire is hung on the hook portion.
FIG. 4 is a side view illustrating a state where a work is conveyed by the robot system.
FIG. 5 is a side view illustrating a robot arm and a crane tool of the robot system according to a second embodiment.
FIG. 6 is a side view illustrating a state where the crane tool is equipped to the robot arm illustrated in FIG. 2.

### DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

A crane tool according to one aspect of the present disclosure includes: a hook portion for hanging a work, attached to one arm section in a first robot arm having a base, a plurality of arm sections connected to the base in series, and a plurality of joints adapted to swing the arm sections, respectively, the crane tool; a counterweight portion; and a connecting portion connecting the hook portion to the counterweight portion. The counterweight portion is located such that a joint swinging the arm section to which the hook portion is attached is interposed between the hook portion and the counterweight portion in substantially a horizontal direction.

In addition, a robot system according to one aspect of the present disclosure includes the above-mentioned crane tool and first robot arm.

The above-described crane tool and the robot system allow for reduced space of the manufacturing line.

By referring to the drawings, preferred embodiments of the present disclosure will be described below in detail. In the description, the element that is substantially the same or has substantially the same function will be provided with the same reference numeral, and the duplicated description will be omitted.

### [First embodiment]

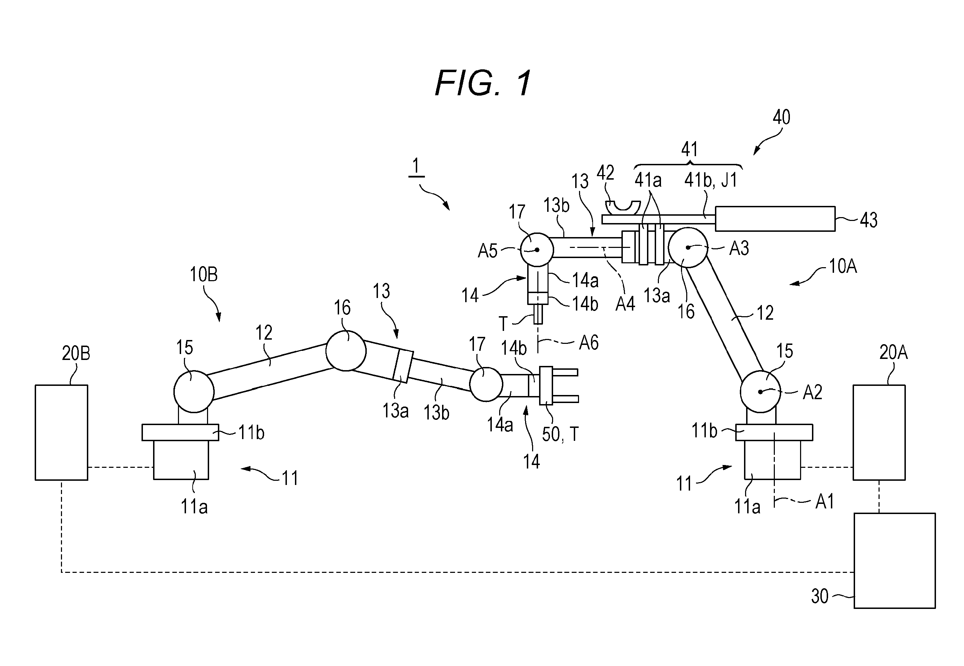

As illustrated in FIG. 1, a robot system 1 includes two robot arms 10A and 10B, two robot controllers 20A and 20B, a programmable logic controller (PLC) 30, a crane tool 40, and a holding tool 50.

Each of the robot arms 10A and 10B has a base 11, three arm sections 12, 13, and 14, and three joints 15, 16, and 17. The three joints 15, 16, and 17 connect the arm sections 12, 13, and 14 to the base 11, respectively, in series. The base 11 has a base stage 11a installed on a floor and a revolving stage 11b provided on the base stage 11a. The base stage 11a incorporates an actuator adapted to revolve the revolving stage 11b around an axis (S axis) A1 extending in substantially the perpendicular direction.

The joint (L axis joint) 15 connects the arm section (lower arm section) 12 to the upper part of the revolving stage 11b. The L axis joint 15 incorporates an actuator adapted to swing the lower arm section 12 around an axis (L axis) A2 that extends substantially in the horizontal direction. That is, the L axis joint 15 swings the lower arm section 12 neighboring the tip side of the L axis joint 15.

The joint (U axis joint) 16 connects the arm section (front arm section) 13 to the lower arm section 12. The U axis joint 16 incorporates an actuator adapted to swing the front arm section 13 around an axis (U axis) A3 that is substantially parallel to the L axis A2. That is, the U axis joint 16 swings the arm section 13 neighboring the tip side of the U axis joint 16.

The joint (B axis joint) 17 connects the arm section (wrist section) 14 to the front arm section 13. The B axis joint 17 incorporates an actuator adapted to swing the wrist section 14 around an axis (B axis) A5 that is substantially orthogonal to a center axis A4 of the front arm section 13.

The front arm section 13 has front arm links 13a and 13b connected in series. The first front arm link 13a in the U axis joint 16 side incorporates an actuator adapted to revolve the second front arm link 13b in the B axis joint 17 side around the center axis (R axis) A4 of the front arm section 13.

The wrist section 14 has a wrist link 14a connected to the B axis joint 17 and an attachment flange 14b connected to the tip side of the wrist link 14a. The wrist link 14a incorporates an actuator adapted to revolve the attachment flange 14b around a center axis (T axis) A6 of the wrist section 14. The attachment flange 14b is attached with various tools T for causing the robot arms 10A and 10B to perform desired operations.

Each of the above-described actuators includes a motor, a decelerator, and an angle sensor, for example. The two robot controllers 20A and 20B are connected to the robot arms 10A and 10B, respectively. The robot controllers 20A and 20B control respective above-described actuators. The robot controllers 20A and 20B are connected to the PLC 30, respectively. The PLC 30 controls the robot arms 10A and 10B through the robot controller 20A and 20B to carry out various operations such as assembly, welding, and conveyance of the work W, for example.

The crane tool 40 is a tool for causing the robot arm 10A (first robot arm) to perform the conveyance operation. The crane tool 40 has a tool body 41, a hook portion 42 for hanging the work W thereon, and a counterweight portion 43.

The tool body 41 has an attachment portion 41a to the front arm section 13 and a joint portion 41b (connecting portion) that connects the hook portion 42 and the counterweight portion 43 to the attachment portion 41a. The attachment portion 41a is attached in a removable manner to the outer periphery of the first front arm link 13a of the front arm section 13. Under the state where the attachment portion 41a is attached to the first front arm link 13a, the joint portion 41b extends along the center axis A4 of the front arm section 13. Then, when the front arm section 13 turns laterally, the joint portion 41b is located over the front arm section 13. Hereafter, description will be provided based on the state where the front arm section 13 is lateral and the joint portion 41b is located over the front arm section 13.

The hook portion 42 has a U-shape opened upward and is fixed on one end of the joint portion 41b. That is, the hook portion 42 is attached to the front arm section 13 that is the second arm section from the root side via the tool body 41. The hook portion 42 is located between the U axis joint 16 and the B axis joint 17 in the direction along the center axis A4.

The counterweight portion 43 is fixed to the other end of the joint portion 41b. That is, the joint portion 41b configures a connecting portion J1 adapted to connect the hook portion 42 to the counterweight portion 43. The counterweight portion 43 is located so as to interpose the U axis joint 16 between the hook portion 42 and the counterweight portion 43 in the direction along the center axis A4 (for example, substantially the horizontal direction). That is, the U axis joint 16 is located such that it is interposed between the counterweight portion 43 and the hook portion 42 in substantially the horizontal direction. Therefore, the counterweight portion 43 generates a moment against a moment generated around the U axis A3 by the weight of the work W to be conveyed. This allows the counterweight portion 43 to reduce the moment generated around the U shape A3. The weight of the counterweight portion 43 is set so that the moment generated around the U axis A3 is within the tolerance of the actuator of the U axis joint 16.

The holding tool 50 is an existing robot hand capable of holding the work W to be conveyed. The holding tool 50 is attached to the attachment flange 14b of the robot arm 10B (second robot arm). The holding tool 50, together with the robot arm 10B, is controlled by the PLC 30.

Next, the conveyance method of the work W with the use of the robot system 1 will be described. First, as illustrated in FIG. 1, the crane tool 40 is attached to the robot arm 10A. Further, the holding tool 50 is attached to the robot arm lOB.

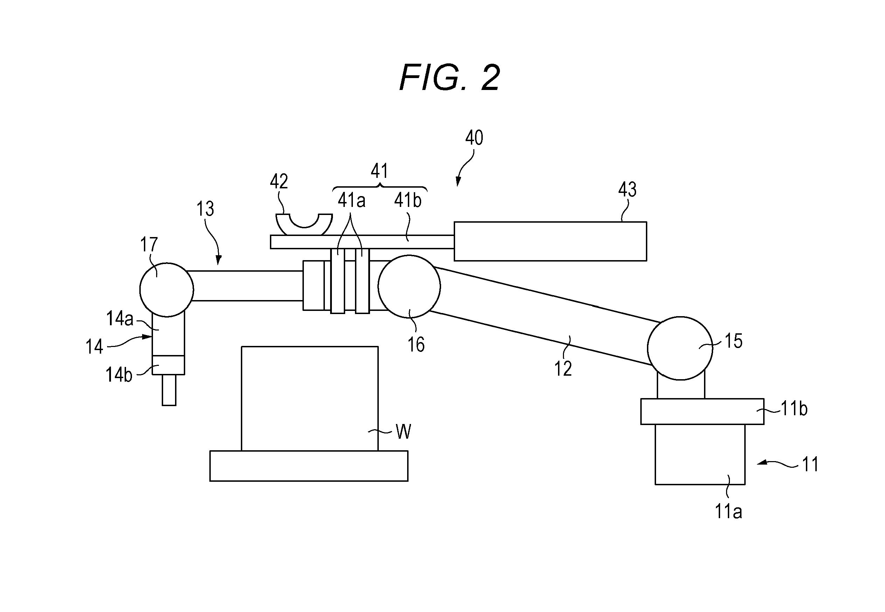

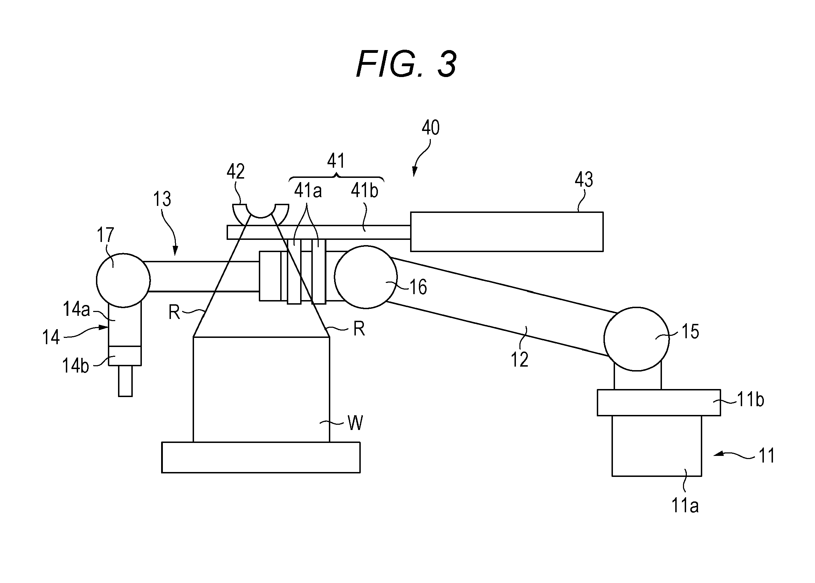

Next, as illustrated in FIG. 2, the PLC 30 controls the robot arm 10A so that the hook portion 42 is lowered facing upward. Specifically, the PLC 30 drives the actuator of the L axis joint 15 so that the lower arm section 12 is lateral, while driving the actuator of the U axis joint 16 so as to maintain the state where the front arm section 13 is lateral and the hook portion 42 faces upward. Under this state, as illustrated in FIG. 3, the wire R for the conveyance is hung on the hook portion 42, and the lower end of the wire R is then connected to the work W.

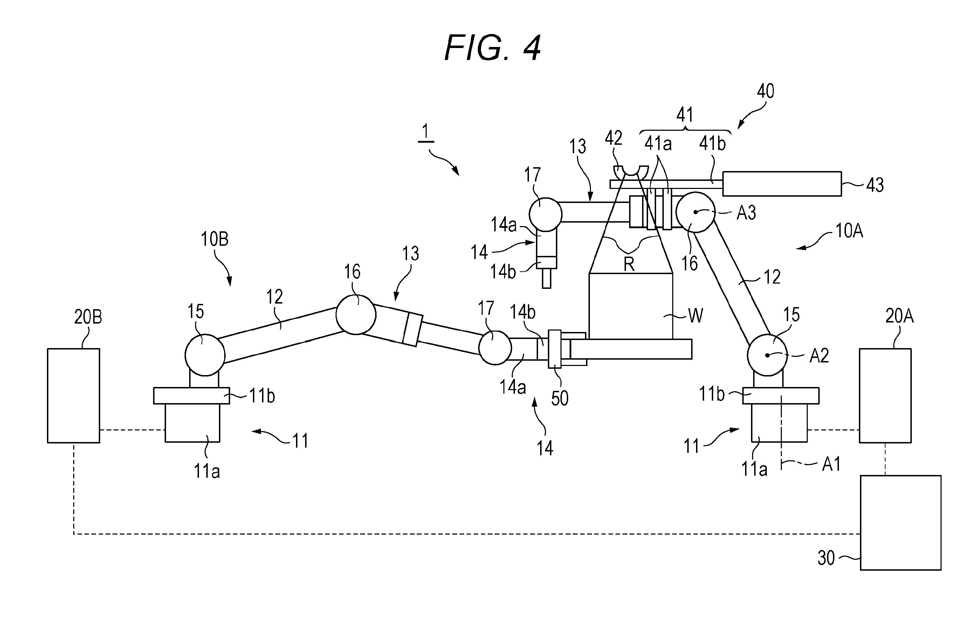

Next, as illustrated in FIG. 4, the PLC 30 controls the robot arm 10A so that the hook portion 42 is lifted facing upward. Specifically, the PLC 30 drives the actuator of the L axis joint 15 so that the lower arm section 12 stands up, while driving the actuator of the U axis joint 16 so as to maintain the state where the front arm section 13 is lateral and the hook portion 42 faces upward. This causes the work W to be suspended via the wire R that is hung on the hook portion 42. Under this state, the PLC 30 controls the robot arm 10B and the holding tool 50 so that the holding tool 50 holds a part of the work W.

Next, the PLC 30 simultaneously controls the robot arms 10A and 10B so that the hook portion 42 and the holding tool 50 move in substantially the same direction. For example, the PLC 30 revolves the revolving stage 11b of the robot arm 10A so that the hook portion 42 moves along the circumference around the S axis A1 as the center. Along with the above, the PLC 30 controls the robot arm 10B so that the holding tool 50 follows the hook portion 42.

Upon the work W reaching a desired position, the PLC 30 controls the holding tool 50 so as to release the work W. The PLC 30 then controls the robot arm 10B so that the holding tool 50 recedes from the vicinity of the work W.

Next, the PLC 30 controls the robot arm 10A so that the hook portion 42 is lowered and the work W is grounded on the floor (see FIG. 3). Specifically, the PLC 30 drives the actuator of the L axis joint 15 so that the lower arm section 12 is lateral, while driving the actuator of the U axis joint 16 so as to maintain the state that the front arm section 13 is lateral and the hook portion 42 faces upward. Under this state, the lower end of the wire R is detached from the work W and thus the wire R is removed from the hook portion 42 (see FIG. 2). As set forth, the conveyance of the work W is completed.

It is noted that the procedure of the conveyance operation is not limited to the above-described order. For example, the crane tool 40 may be attached after the lower arm section 12 is turned to be lateral and the front arm section 13 is lowered instead of that the hook portion 42 is lowered after the crane tool 40 is attached to the robot arm 10A. The wire R may be hung on the hook portion 42 after the wire R is connected to the work W. Alternatively, the wire R may be detached from the work W after the wire R is removed from the hook portion 42. The holding tool 50 may follow the hook portion 42 while holding the work W not only when the work W is conveyed in substantially the horizon direction but also when the work W is lift or lowered.

In the robot system 1 as described above, the work W can be hung on the hook portion 42 attached to the front arm section 13. At this time, the moment caused by the weight of the work W works on the U axis joint 16 that swings the front arm section 13 in the robot arm 10A. In this regard, the robot system 1 has the counterweight portion 43. The counterweight portion 43 is provided so as to interpose the U axis joint 16 between the hook portion 42 and the counterweight portion 43 in substantially the horizontal direction. The counterweight portion 43 generates the moment against the moment caused by the weight of the work W. This allows the counterweight portion 43 to reduce the moment working on the U axis joint 16. Thereby, the actuator of the U axis joint 16 of the robot arm 10A that is not designed to perform the conveyance operation of the work W is able to adapt to the conveyance of the work W.

The moment caused by the weight of the work W works also on the L axis joint 15 that swings the lower arm section 12 in the root side of the front arm section 13. The actuator of the L axis joint 15 is designed to adapt to the inertia of more arm sections, compared to the actuator of the U axis joint 16. Therefore, the output of the actuator of the L axis joint 15 has sufficient capacity. Thus, the actuator of the L axis joint 15 is also able to adapt to the conveyance of the work W.

Therefore, the robot arm 10A is able to convey the work W by the driving of the L axis joint 15 and the U axis joint 16 under the state where the work W is hung on the hook portion 42. As such, in the robot system 1, the robot arm 10A can be adapted to the conveyance operation. Therefore, it is not necessary for the robot system 1 to have the apparatus dedicated for the conveyance. This allows for reduced space for the manufacturing line.

Further, the robot system 1 includes two robot arms 10A and 10B. One robot arm 10A is attached with the crane tool 40. The other robot arm 10B is attached with the holding tool 50. The hook portion 42 of the robot arm 10A is able to hang the work W thereon, while the holding tool 50 of the other robot arm 10B is able to hold the work W. Then, the two robot arms 10A and 10B are able to move the hook portion 42 and the holding tool 50 in substantially the same direction. This allows the robot system 1 to convey the work W at a stable attitude.

### [Second embodiment]

The robot system according to the second embodiment is different from the robot system of the first embodiment in that a part of the robot arm can be removed when the crane tool is attached.

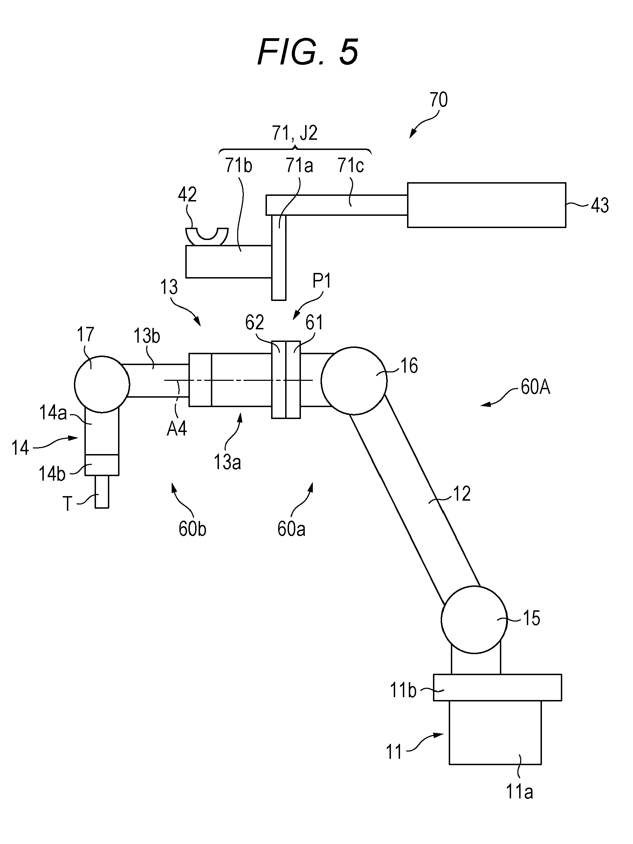

As illustrated in FIG. 5, in the robot arm 60A (first robot arm) of the robot system according to the second embodiment, the root part of its front arm section 13 is provided with a dividing part P1. This allows the robot arm 60A to be separated at the dividing part P1 into a first arm 60a in the root side and a second arm 60b in the tip side. The dividing part P1 is provided to the first front arm link 13a. The actuator that revolves the second front arm link 13b is disposed in the tip side of the dividing part P1.

The tip of the first arm 60a is provided with an auto tool changer (ATC) 61, for example. The base end of the second arm 60b is provided with an adaptor 62 that can be held by the ATC 61. The ATC 61 holds the adaptor 62, so that the first arm 60a and the second arm 60b are connected to each other.

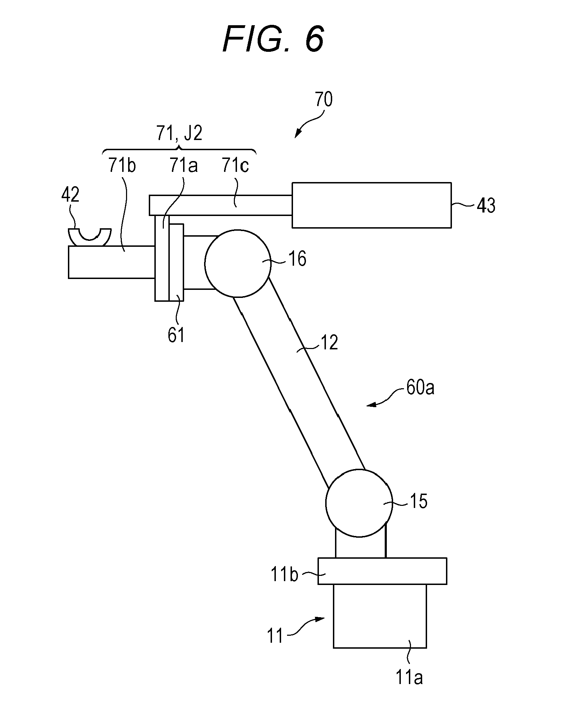

The crane tool 70 has a tool body 71 in place of the tool body 41. As illustrated in FIG. 6, the tool body 71 is connected to the first arm 60a from which the second arm 60b has been removed. The tool body 71 has an adaptor 71a that can be held by the ATC 61, and joint portions 71b and 71c.

Under the state where the adaptor 71a is held by the ATC 61, the joint portions 71b and 71c extend along the center axis A4 of the front arm section 13. The joint portion 71b protrudes from the adaptor 71a to the opposite side of the U axis joint 16. The hook portion 42 is fixed on the upper surface of the end of the joint portion 71b. That is, the hook portion 42 is attached via the tool body 71 to the front arm section 13 that is the second arm section from the root side. The hook portion 42 is located more front side than the U axis joint 16 along the direction of the center axis A4.

The joint portion 71c protrudes from the adaptor 71a to the U axis joint 16 side. The end of the joint portion 71c is fixed to the counterweight portion 43. That is, the adaptor 71a and the joint portions 71b and 71c configure the connecting portion J2 that connects the hook portion 42 to the counterweight portion 43. The counterweight portion 43 is located so as to interpose the U axis joint 16 between the hook portion 42 and the counterweight portion 43 in the direction along the center axis A4 (for example, substantially the horizontal direction). That is, the U axis joint 16 is located such that it is interposed between the counterweight portion 43 and the hook portion 42 in substantially the horizontal direction).

The robot system of the second embodiment allows for the reduction of the self-weight of the robot arm 60A during the conveyance operation. As a result, the load can be reduced in the actuators of the U axis joint 16 and the L axis joint 15. In addition, the tip of the first arm 60a is provided with the ATC 61. Further, the second arm 60b is provided with the adaptor 62 that can be held by the ATC 61. Furthermore, the crane tool 70 is provided with the adaptor 71a that can be held by the ATC 61. Therefore, the second arm 60b and the crane tool 70 can be automatically exchanged. This allows for the automatic transfer from the conveyance operation of the work W to other operation than the conveyance in the robot system.

As set forth, the preferred embodiments of the present disclosure have been described. The present disclosure is not limited to the above-described embodiments. The present disclosure can be modified in various ways without departing its concept. The arm section to which the crane tool 70 is attached is not limited to the front arm section 13. For example, the crane tool 70 may be attached to the lower arm section 12 or the wrist section 14. The present disclosure is applicable to the robot system including a dual arm robot device in which two robot arms are attached to one body.

The robot system, the crane tool, and conveyance method of the present disclosure may be the following first to third robot systems, first crane tool, and first or second conveyance method.

The first robot system includes a robot arm having a base, a plurality of arm sections, and a plurality of joints that connect the plurality of arm sections to the base in series and cause the arm section neighboring the tip side to swing, respectively, and further includes a crane tool for causing the robot arm to perform conveyance operation. The crane tool has a hook portion attached to the arm section and hangs a work thereon, a counterweight portion located such that the joint adapted to swing the arm section is interposed between the hook portion and the counterweight portion, and a connecting portion connecting the hook portion to the counterweight portion.

In the first robot system, the second robot system further includes two of the robot arms and a holding tool for causing the robot arm to hold the work, the crane tool is attached to one of the robot arms, and the holding tool is attached to the other robot arm.

The third robot system is a robot system in the first or second robot system, in which the arm section to which the hook portion is attached is provided with a dividing part that divides the robot arm into two sections, and the section of the robot arm of the tip side of the dividing part is removable when the crane tool is attached to the robot arm.

The first crane tool is a tool for causing a robot arm to perform conveyance operation, in which the robot arm has a base, a plurality of arms, and a plurality of joints that connect the plurality of arm sections to the base in series. The first crane tool has a hook portion attached to the arm section to hang a work thereon, a counterweight portion located such that the joint adapted to swing the arm is interposed between the hook portion and the counterweight portion, and a connecting portion connecting the hook portion to the counterweight portion.

The first conveyance method uses any one of the first to third robot systems to attach the crane tool to the robot arm, hang the work on the hook portion, and move the hook portion by the robot arm.

The second conveyance method uses the second robot system to attach the crane tool to one of the robot arms, attach the holding tool to the other robot arm, hang the work on the hook portion and cause the holding tool to hold the work, and move the hook portion and the holding tool in the same direction by the two robot arms.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A crane tool (40, 70) comprising:
a hook portion (42) for hanging a work (W), attached to one arm section (13) in a first robot arm (10A, 60A) having a base (11), a plurality of arm sections (12 to 14) connected to the base in series, and a plurality of joints (15 to 17) adapted to swing the arm sections, respectively, the crane tool;
a counterweight portion (43); and
a joint portion (J1, J2) connecting the hook portion to the counterweight portion,
wherein the counterweight portion is located such that a joint (16) swinging the arm section to which the hook portion is attached is interposed between the hook portion and the counterweight portion in substantially a horizontal direction.

2. A robot system (1) comprising the crane tool (40, 70) according to claim 1 and the first robot arm (10A, 60A).

3. The robot system (1) according to claim 2, wherein the joints (15 to 17) of the first robot arm (10A, 60A) incorporate actuators adapted to swing the arm sections (12 to 14), respectively.

4. The robot system (1) according to claim 2 or 3 further comprising a second robot arm (10B) including a holding tool (50) for holding the work (W).

5. The robot system (1) according to any one of claims 2 to 4,
wherein the arm section (13) to which the hook portion (42) is attached is provided with a dividing part (P1) that divides the first robot arm (60B) into two sections,
wherein a tip side section of a dividing part of the first robot arm is removable, and
wherein the crane tool (70) is attached to a root side section of the dividing part of the first robot arm.

6. A conveyance method comprising:
hanging the work (W) on the hook portion (42) of the crane tool (40, 70) attached to the first robot arm (10A, 60A) in the robot system (1) according to any one of claims 2 to 5; and
moving the hook portion by the first robot arm.

7. A conveyance method comprising:
hanging the work (W) on the hook portion (42) of the crane tool (40, 70) attached to the first robot arm (10A, 60A) in the robot system (1) according to claim 4;
holding the work by the holding tool (50) of the second robot arm (10B); and
moving the hook portion and the holding tool in substantially the same direction by the first and second robot arms.
